# EUROPEAN PATENT SPECIFICATION

(11) **EP 3 032 794 B1**
(45) Date of publication and mention of the grant of the patent: **27.11.2019**
(21) Application number: 14290377.2
(22) Date of filing: 11.12.2014
(51) Int. Cl.: H04L 29/06

(54) **A SESSION INITIATION PROTOCOL CLIENT, SERVER AND METHODS**
SITZUNGSINITIIERUNGSPROTOKOLL-CLIENT, SERVER UND VERFAHREN
CLIENT, SERVEUR ET PROCÉDÉS DE PROTOCOLE D'INITIATION DE SESSION

(43) Date of publication of application: 15.06.2016
(73) Proprietor: Alcatel Lucent, 91620 Nozay (FR)
(72) Inventor: Gooris, Dirk Anthony, 2132 JE Hoofddorp (NL); van Nieuwaal, Pieter, 2132 JE Hoofddorp (NL); Blom, Antonius, 2132 JE Hoofddorp (NL)
(74) Representative: IP HILLS NV

(56) References cited:
- WO-A2-2010/014997
- US-A1- 2004 095 938
- KAPLAN ORACLE H: "A Session Identifier for the Session Initiation Protocol (SIP); rfc7329.txt", A SESSION IDENTIFIER FOR THE SESSION INITIATION PROTOCOL (SIP); RFC7329.TXT, INTERNET ENGINEERING TASK FORCE, IETF; STANDARD, INTERNET SOCIETY (ISOC) 4, RUE DES FALAISES CH- 1205 GENEVA, SWITZERLAND, 21 August 2014 (2014-08-21), pages 1-17, XP015104438, [retrieved on 2014-08-21]

## Description

### Technical Field

The present invention generally relates to session initiation protocols used to control multimedia communication sessions in communication networks like for instance Internet Protocol or IP based networks. Such a session initiation protocol is a signalling protocol that enables to establish, modify and terminate a multimedia communication session such as a voice call, a video conference, instant messaging, a file transfer, an online game session, etc. Examples of such session initiation protocols are the Session Initiation Protocol or SIP as defined in IETF RFC 3261, H.323, the eXtensible Messaging and Presence Protocol or XMPP, Jabber, the Inter-Asterisk Exchange Protocol or IAX2, the Skinny Client Control Protocol or SCCP, etc.

### Background

In order to establish, modify or terminate a multimedia session, dialogs are established between a SIP client and a SIP server. Each dialog consists of a SIP request message sent from the SIP client to the SIP server, and a SIP response message sent from the SIP server to the SIP client in return to the SIP request message received by the SIP server. The SIP request and SIP response belonging to a single dialog are correlated with each other. In the Session Initiation Protocol as defined in IETF RFC 3261 for instance, the SIP request and SIP response both have a SIP header with identical "Call-ID" attribute values.

To establish, modify or terminate an end-to-end multimedia session, multiple dialogs are typically chained between an endpoint SIP client, intermediate entities, and an endpoint SIP server. The intermediate entities each host a SIP server and a SIP client and are often called SIP proxy servers or Back-to-Back User Agents.

For troubleshooting purposes, monitoring tools may have to analyse the entire SIP message flow throughout the network, i.e. the SIP request messages and SIP response messages of multiple dialogs belonging to a single end-to-end multimedia session initiation.

One way to retrieve the SIP messages belonging to an end-to-end multimedia session consists in matching the values of the uniform resource identifier or URI, the "To" header and the "From" header of SIP messages. The information contained in these headers however may be modified by intermediate entities as a result of which SIP messages may not be correlated with each other while they belong to the same end-to-end multimedia session initiation. In addition, since the information contained in these headers is not unique, the method runs the risk that false matches are found: SIP messages that do not belong to the same end-to-end multimedia session initiation may be correlated with each other. As a consequence, the monitoring and troubleshooting of SIP related problems is not reliable.

An alternative method to retrieve SIP messages belonging to an end-to-end multimedia session consists in partially matching the URI and information contained in the "To" header and "From" header. This method may be improved by further comparing information contained in the SIP message body sections. Although the number of unfound matching SIP messages may be reduced this way, the alternative method runs a higher risk that false matches are found since partial matches of header information between SIP messages of different end-to-end multimedia sessions will more frequently occur. Such false matches may be suppressed using heuristics such as a time window, but also this approach remains error prone.

United States Patent Application US 2004/0095938A1 proposes to include in a SIP Request header an integer-type session ID. This integer-type session ID preferably corresponds to the IP Port identifier of the sender (see US 2004/0095938A1, paragraph [0068]). The integer-type session ID can be processed faster than the string-type Call ID that is traditionally included in the SIP Request header and hence enables a faster mapping / distribution of received SIP messages to SIP servers if SIP message processing is distributed over multiple servers for load balancing reasons.

International Patent Application WO 2010/014997A2 describes calculation of a unique Dialog ID for a SIP Dialog, after a first message has been sent for that SIP Dialog. The unique Dialog ID is embedded in subsequent SIP messages that are associated with, i.e. belong to, the same SIP Dialog. This way, associating messages with SIP Dialogs is made easier, less time and processing consuming, as the receiver of each SIP message no longer has to calculate the unique Dialog ID from the Call ID, sender tag and receiver tag in the received SIP message.

IETF RFC 7329 entitled "A Session Identifier for the Session Initiation Protocol (SIP) describes on pages 15-16 a call flow including an INVITE message from Alice sent to B2BUA, with a Session ID sent in a separate header: "sessid:1". The separate header "sessid:1" is uniquely identifying a session across all SIP dialogs.

### Summary

It is consequently an objective to provide a SIP client and SIP server that facilitate monitoring and correlating SIP messages that belong to a single end-to-end multimedia session in a uniform and more reliable manner. More particularly, it is an objective to disclose a SIP client and SIP server that enable to correlate SIP messages with reduced amount of false matches and reduced amount of unfound matches.

The invention is defined by a Session Initiation Protocol, SIP Client according to claim 1, a method of generating a SIP request according to claim 2, a SIP server according to claim 3 and a method of generating a SIP request according to claim 5.

### Brief Description of the Drawings

Fig. 1 illustrates the generation of SIP request messages by different embodiments of the SIP client according to the present invention;
Fig. 2 illustrates the generation of SIP response messages by different embodiments of the SIP server according to the present invention;
Fig. 3 illustrates the operation of SIP header insertion logic in embodiments of the SIP client according to the present invention; and
Fig. 4 illustrates the operation of SIP header deletion logic in embodiments of the SIP server according to the present invention.

### Detailed Description of Embodiment(s)

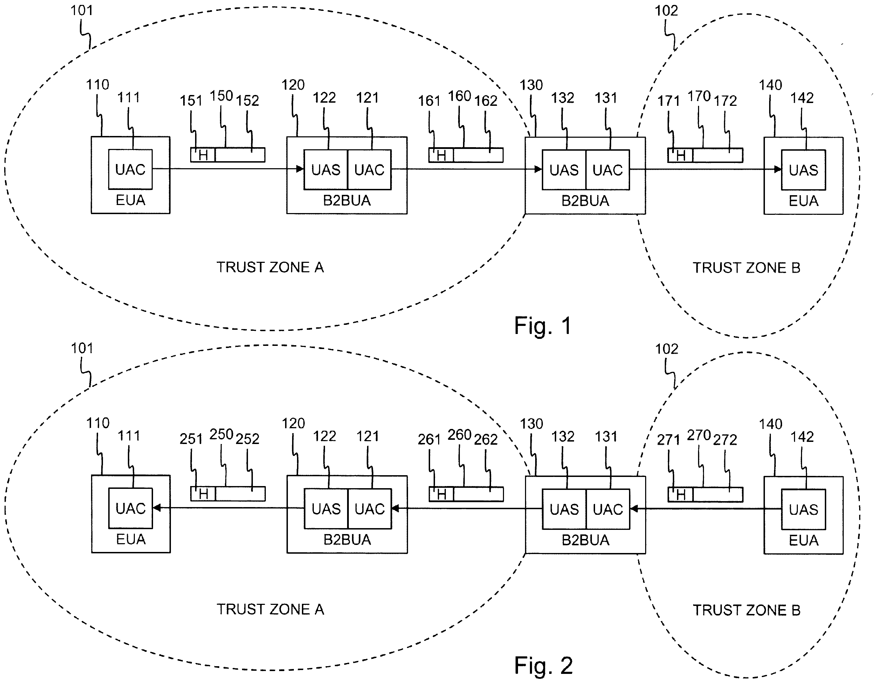

Fig. 1 and Fig. 2 illustrate end-to-end multimedia session establishment in an embodiment of the present invention that uses the Session Initiation Protocol or SIP as standardized by the Internet Engineering Task Force or IETF in RFC3261 and RFC3262, with amendments enabling to implement the current invention. Fig. 1 and Fig. 2 show an Endpoint User Agent EUA 110 hosting a SIP User Agent Client UAC 111, an intermediate SIP entity or Back-to-Back User Agent B2BUA 120 hosting a User Agent Client UAC 121 and a User Agent Server UAS 122, another Back-to-Back User Agent B2BUA130 hosting a User Agent Client UAC 131 and a User Agent Server UAS 132, and an Endpoint User Agent EUA 140 hosting a SIP User Agent Server UAS 142. The Endpoint User Agent 110 and the Back-to-Back User Agent 120 form part of a first trust zone 101, whereas the Endpoint User Agent 140 forms part of a second trust zone 102. The Back-to-Back User Agent 130 resides at the border between the trusted zones 101 and 102.

IETF's RFC3261 and RFC3262 describe how dialogs are established between a User Agent Client (UAC), i.e. a SIP entity that can send a SIP request, and a User Agent Server (UAS), i.e. a SIP entity that can send a SIP response in answer to a SIP request. The header of the SIP request and response messages contains an attribute called Call-ID that correlates a SIP request message with the corresponding SIP response message. The SIP request message and corresponding SIP response message jointly form a SIP dialog.

An end-to-end multimedia session initiation like the one illustrated by Fig. 1 and Fig. 2 typically comprises multiple dialogs that are chained using intermediate SIP entities or Back-to-Back User Agents (B2BUA) that host both a User Agent Server UAS responding to a SIP request and a User Agent Client UAC that sends a SIP request, i.e. a copy or modified version of the received SIP request, to the next hop in the signaling chain.

An end-to-end multimedia session initiation like the one illustrated by Fig. 1 and Fig. 2 typically spans multiple trust zones. The SIP signaling messages indeed may pass different trusted zones, such as an end-user trust zone, a core trust zone, a carrier trust zone, etc. Information provided by a SIP User Agent in one trust zone may not be trusted by a SIP User Agent in another trust zone. Since the borders of the trust zones are usually implemented by Back-to-Back User Agents (B2BUAs), the Back-to-Back User Agents may behave differently in passing SIP requests or responses to the next hop depending on whether they are located at the border of a trust zone or not.

Fig. 1 shows the SIP request messages that are sent as part of an end-to-end multimedia session initiation. Fig. 2 shows the corresponding SIP response message flow. UAC 111 in EUA 110 generates a SIP request 150 with SIP header 151 and SIP message body 152 and sends this SIP request 150 to B2BUA 120. In B2BUA 120, UAS 122 receives SIP request 150 and UAC 121 generates a new SIP request 160 with SIP header 161 and SIP message body 162, and sends this new SIP request 160 to B2BUA 130 which implements the border between trusted zones 101 and 102. In B2BUA 130, UAS 132 receives SIP request 160 and UAC 131 generates a new SIP request 170 with SIP header 171 and SIP message body 172, and sends this new SIP request 170 to EUA 140. In EUA140, UAS 142 receives SIP request 170 and generates a SIP response message 270 with SIP header 271 and SIP message body 272. This SIP response message 270 is sent to B2BUA 130 in response to SIP request 170. In B2BUA 130, UAC 131 receives SIP response 270 and UAS 132 generates a SIP response 260 with SIP header 261 and SIP message body 262. SIP response 260 is sent back to B2BUA 120 in response to SIP request 160. In B2BUA 120, UAC 121 receives SIP response 260 and UAS 122 generates a SIP response 250 containing a SIP header 251 and SIP message body 252. SIP response 250 is sent back to EUA 110 in response to SIP request 150. In EUA 110, UAC 111 receives and interprets SIP response 250. SIP request 150 and SIP response 250 jointly form a first dialog of the end-to-end multimedia session initiation. Similarly, SIP request 160 and SIP response 260 form a second dialog, and SIP request 170 and SIP response 270 form a third dialog.

The user agent clients 111, 121 and 131 and the user agent servers 122, 132 and 142 introduce in the respective SIP request messages and SIP response messages which they generate a SIP header H that contains information uniquely identifying the end-to-end multimedia session initiation. This SIP header is passed on between the dialogs of a single end-to-end multimedia session initiation by the Back-to-Back User Agents, although the information uniquely identifying the multimedia session initiation may be different in headers of subsequent SIP request or SIP response messages, as will be explained in more detail below. The user agent clients 111, 121 and 131, and the user agent servers 122, 132 and 142 introduce a SIP header H that is named P-Trace-ID. The P-Trace-ID header contains a unique value or identifier of the multimedia session initiation, propagates through the network by passing the B2BUAs, remains invisible for end-users and does not play an active role in the behavior of the service that is established, e.g. telephony service. The P-Trace-ID header facilitates the preservation of the multimedia session identity which will help a monitoring system to correlate the SIP request and response messages associated with a single multimedia session setup, for instance in case of failure and troubleshooting.

The P-Trace-ID header contains one or more attributes. The attribute value(s) can be of any type or length, as long as the attribute value(s) is/are unique per multimedia session setup: the attribute value(s) in other words may not be used in another multimedia session setup. In general, a copy of the Call-ID parameter value can be used to populate the attribute(s) of the P-Trace-ID header. Since the Call-ID value uniquely identifies a dialog, it is also unique for the multimedia session initiation: the same Call-ID value cannot be used to identify a dialog in a different multimedia session initiation. Preferably however, the P-Trace-ID header holds a unique identity that remains intact to the point where the header gets removed on purpose, e.g. when crossing a trust zone border.

It is noticed that the P-Trace-ID header implementation does not dictate any particular parameter name. It is however preferred to use the parameter name "call-id" when using the Call-ID as value for the P-Trace-ID header attribute.

It is further noticed that the P-Trace-ID header comprises at least one attribute. It may include additional attributes for any purpose of traceability or to make the combination of attributes unique.

In Fig. 1, UAC 111 that supports the P-Trace-ID header mechanism and is not part of a B2BUA, inserts the P-Trace-ID header 151 in SIP request 150. The value of this header is copied from the Call-ID of the dialog where SIP request 150 belongs to. UAC 121 that also supports the P-Trace-ID header mechanism but is part of a B2BUA 120 that is not at a trust zone border, inserts the P-Trace-ID header 161 in SIP request 160 and copies therein the P-Trace-ID header 151 that it received from UAS 122. UAC 131 that also supports the P-Trace-ID header mechanism and is part of a B2BUA 130 at a trust zone border, deletes the P-Trace-ID header 161 that is present in the SIP request 160 received at UAS 132 and inserts a new P-Trace-ID header 171 in the newly generated SIP request 170 sent to EUA 140. The value inserted in this new P-Trace-ID header 171 corresponds to the Call-ID value of the dialog where SIP request 170 belongs to.

As mentioned here above, the B2BUA 130 at a trust zone border deletes the P-Trace-ID header 161 that is present in the SIP request 160 received at UAS 132 and inserts a new P-Trace-ID header 171 in the newly generated SIP request 170 sent to EUA 140.

Alternatively, if the trust zone 102 does not support the P-Trace-ID header, the P-Trace-ID will not be generated in the request of 170.

In Fig. 2, UAS 142 that supports the P-Trace-ID header mechanism and is not part of a B2BUA, inserts the P-Trace-ID header 271 in SIP response 270. The value inserted in this header 271 corresponds to the Call-ID value of the dialog where SIP response 270 belongs to. UAS 132 that also supports the P-Trace-ID header mechanism and is part of a B2BUA that implements a trust zone border, deletes the P-Trace-ID header 271 that is present in the SIP response 270 received at UAC 131 and inserts a new P-Trace-ID header 261 in the newly generated SIP response 260. The value inserted in this header 261 corresponds to the Call-ID value of the dialog where SIP response 260 belongs to. UAS 122 that also supports the P-Trace-ID header mechanism and is part of a B2BUA that is not at a trust zone border, generates the P-Trace-ID header 251 for SIP response 250 and copies therein the P-Trace-ID header 261 that it received from UAC121.

As mentioned here above, the UAS 132 deletes the P-Trace-ID header 271 that is present in the SIP response 270 received at UAC 131 and inserts a new P-Trace-ID header 261 in the newly generated SIP response 260 sent by UAS 132.

Alternatively, if the trust zone 101 does not support the P-Trace-ID header, the P-Trace-ID will not be generated in the response of 260.

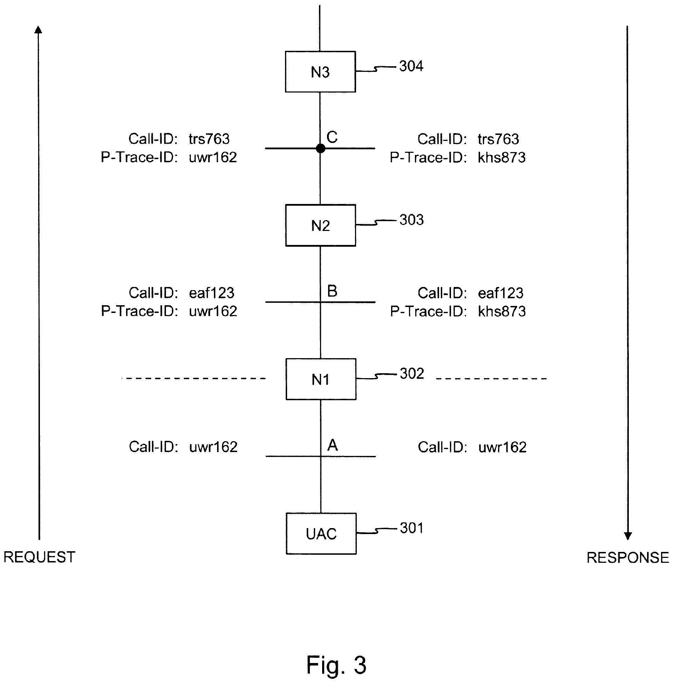

Insertion of the P-Trace-ID header is further explained with reference to the diagram of Fig. 3.This figure shows a SIP user agent client 301 and three SIP aware nodes, 302, 303 and 304, that are all B2BUA network elements or intermediate SIP aware entities. N1 or 302 is assumed to be a trust zone border controller. N2 or 303, and N3 or 304 are no trust zone border controllers. A, B and C denote probe locations of a monitoring system that monitors SIP request and response messages, for instance for troubleshooting purposes.

A SIP INVITE request arriving at N1 contains a Call-ID header identifying the SIP dialog between UAC 301 and node 302. The Call-ID is supposed to contain "uwrt162". It is further assumed that the SIP INVITE message arriving at N1 does not contain a P-Trace-ID header. This may for instance be the case if UAC 301 does not implement the present invention. Node 302 will generate and insert the P-Trace-ID header when forwarding the SIP INVITE request to the next node 303. For the purpose of monitoring, the Call-ID value received from UAC 301 will be used to populate the P-Trace-ID header within the dialog between node N1 and node N2. The value of the P-Trace-ID will be 'uwr162'. A monitoring system is now able to correlate the dialog in the zone between UAC 301 and node N1. Node 303 and subsequent nodes like node 304, forming part of the core network, will act transparently for the P-Trace-ID header equal to "uwrt162". Thus, node 303 will leave the P-Trace-ID header unchanged whereas in accordance with existing SIP standards, it will replace the Call-ID header with a new Call-ID, for example "trs763" identifying the dialog between N2 and N3. In the reverse direction, nodes N3 and N2 will forward the response and respectively amend the Call-ID header to correspond with the Call-ID "trs763" identifying the dialog between N2 and N3 and Call-ID "eaf123" identifying the dialog between N2 and N1. The received P-Trace-ID header which is assumed to be "khs873" in this example will be left unchanged by nodes N3 and N2 when forwarding the SIP response messages, e.g. response messages 180 Ringing and 200 OK. Node N1 which controls the trust zone border shall strip the P-Trace-ID header off the response messages. No new P-Trace-ID header will be inserted in the particular example of Fig. 3 because UAC 301 is assumed to be unaware of this header. Node N1 shall only amend the Call-ID header to correspond with the identification "uwr162" of the SIP dialog between UAC 301 and N1.

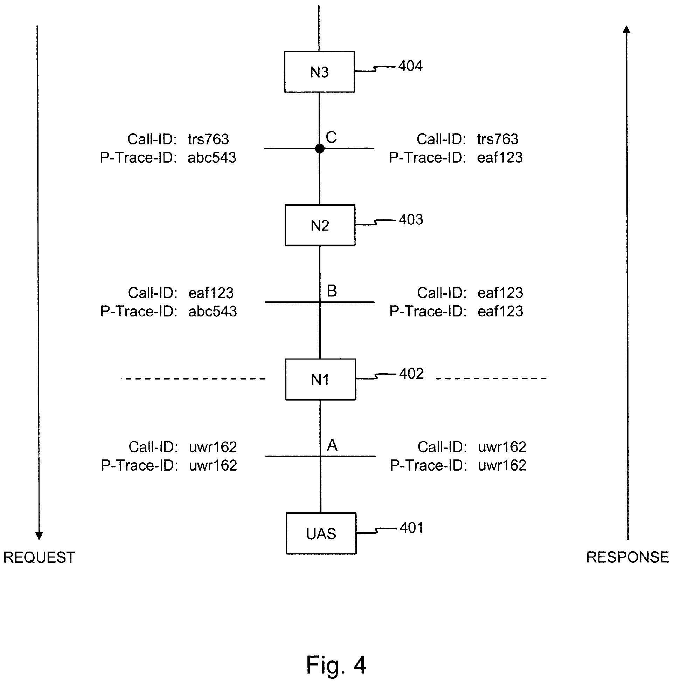

Deletion of the P-Trace-ID header is further explained with reference to the diagram of Fig. 4.This figure again shows a SIP user agent client 401 and three SIP aware nodes, 402, 403 and 404, that are all B2BUA network elements or intermediate SIP aware entities. N1 or 402 is assumed to be a trust zone border controller. N2 or 403, and N3 or 404 are no trust zone border controllers. A, B and C denote probe locations of a monitoring system that monitors SIP request and response messages, for instance for troubleshooting purposes.

The P-Trace-ID header that may be present in the SIP request messages or SIP response messages that are about to leave a trust zone, e.g. the core network, will be stripped from those messages to enforce topology hiding towards the other trust zone. The P-Trace-ID header should not be presented to an outside network. This is the responsibility of a B2BUA that controls the border of trust zones, like 402 in Fig. 4.

A SIP INVITE request message that comes from inside the core network is assumed to contain a P-Trace-ID header containing "abc543" when it is received by node 404. Nodes N3 and N2 will act transparently for the P-Trace-ID header, i.e. the SIP INVITE message will be forwarded with unchanged P-Trace-ID header equal to "abc543". Node N3 will amend the Call-ID header of that message to contain the identification "trs763" of the SIP dialog between N3 and N2. Similarly, node N2 will amend the Call-ID header of the SIP INVITE request to contain the identification "eaf123" of the SIP dialog between N2 and N1. At node N1, which is a trust zone border controller, the rule applied here is to delete the P-Trace-ID header because the core network is left. Node N1 adapts the Call-ID header to contain the identification "uwrt162" of the dialog between N1 and UAS 401. Node N1 further generates and inserts a new P-Trace-ID header. If the P-Trace-ID is newly generated, the P-Trace-ID could be the same value as the Call-ID, namely "uwr162". In the following it is assumed that the P-Trace-ID header is deleted and a new P-Trace-ID header is generated between node N1 and UAS 401. This P-Trace-ID header shall contain a copy of the Call-ID header, i.e. "uwrt162". Response messages to the SIP INVITE request, such as for instance 180 Ringing, 200 OK, generated by UAS 401 will carry a P-Trace-ID header based on the Call-ID identifying the SIP dialog between UAS 401 and node N1, i.e. "uwr162". Node N1 may also delete this P-Trace-ID header from the received response messages and insert a new P-Trace-ID header that corresponds with the Call-ID header identifying the dialog between N1 and N2, i.e. "eaf123". In this example the P-Trace-ID header will get the value "eaf123". The nodes N2 and N3 that are assumed to form part of the core network shall leave the P-Trace-ID header unchanged. N2 shall only replace the Call-ID header with the identification "trs763" of the SIP dialog between N2 and N3 when forwarding the response messages.

It is noticed that the logic to add or delete the P-Trace-ID header to or from a SIP request message or a SIP response message can be implemented by means of a SIP message screening filter.

It is further noticed that it is recommended to add the P-Trace-ID header to all SIP request messages and SIP response messages in order to improve SIP signaling troubleshooting. Exception is the 100 Trying response.

Except for intermediate SIP proxies that represent a trust zone border controller, it is recommended that each node receiving the P-Trace-ID header transparently passes this header to the next hop node. No alterations to parameters or attributes of the P-Trace-ID header shall be applied.

The present invention allows for a uniform and unambigous method to correlate SIP dialogs that are chained by intermediate SIP proxies or so called back-to-back user agents. Correlation of SIP dialogs is essential in SIP troubleshooting when the end-to-end multimedia session setup passes such B2BUAs in the signaling path. Existing correlation methods are not reliable and result in false positives or missing matches that are part of the multimedia session setup.

## Claims

1. A session initiation protocol client or SIP client (131), said SIP client (131) being configured:
- to generate a SIP request (170) as part of an end-to-end multimedia session initiation;
- to generate and send a Call-ID header and P-Trace ID header for said SIP request (170); and
- to send said SIP request (170) to a SIP server (142), said SIP request (170) and a SIP response (270) sent from said SIP server (142) to said SIP client (131) jointly forming a single SIP dialog (170, 270) of said end-to-end multimedia session initiation, said SIP client (131) comprising:
- a SIP header generator adapted to generate and insert in said SIP request (170) a SIP header (171) containing at least one attribute value uniquely identifying said multimedia session initiation across multiple SIP dialogs that form part of said multimedia session initiation,
wherein said SIP client (131) as part of an intermediate SIP aware entity (130) at the border between trusted zones (101, 102) is further configured to delete the P-Trace ID header present in a received SIP request (160) belonging to said multimedia session initiation and insert a new P-Trace ID header in the newly generated SIP request (170), said new P-Trace ID header comprising the Call-ID value of said SIP dialog (170, 270).

2. A method of generating a session initiation protocol request or SIP request (170) as part of an end-to-end multimedia session initiation, generating and sending a Call-ID header and P-Trace ID header for said SIP request (170) and sending said SIP request (170) from a SIP client (131) to a SIP server (142), said SIP request (170) and a SIP response (270) sent from said SIP server (142) to said SIP client (131) jointly forming a single SIP dialog (170, 270) of said end-to-end multimedia session initiation, said method comprising:
- generating and inserting in said SIP request (170) a SIP header (171) containing at least one attribute value uniquely identifying said multimedia session initiation across multiple SIP dialogs that form part of said multimedia session initiation,
wherein said method comprises at a SIP client (131) as part of an intermediate SIP aware entity (130) at the border between trusted zones (101, 102) deleting the P-Trace ID header present in a received SIP request (160) belonging to said multimedia session initiation and inserting a new P-Trace ID header in the newly generated SIP request (170), said new P-Trace ID header comprising the Call-ID value of said SIP dialog (170, 270).

3. A session initiation protocol server or SIP server (132), said SIP server (132) being configured:
- to receive a SIP request (160) from a SIP client (121) as part of an end-to-end multimedia session initiation;
- to generate and send a SIP response (260) to said SIP client (121), said SIP request (160) and said SIP response (260) jointly forming a single SIP dialog (160, 260) of said end-to-end multimedia session initiation; and
- to copy a Call-ID header from said SIP request (160) into a Call-ID header of said SIP response (260), said SIP server (132) comprising:
- a SIP header generator adapted to generate and insert in said SIP response (260) a SIP header (261) containing at least one attribute value uniquely identifying said multimedia session initiation across multiple SIP dialogs that form part of said multimedia session initiation, wherein said SIP server (132) as part of an intermediate SIP aware entity (130) at the border between trusted zones (101, 102) is further configured to delete a P-Trace ID header present in a received SIP response (270) belonging to said multimedia session initiation and insert a new P-Trace ID header in the newly generated SIP response (260), said new P-Trace ID header comprising the Call-ID value of said SIP dialog (160, 260).

4. A SIP server (122, 132, 142) according to claim 3,
wherein said SIP header generator is configured to not insert said SIP header in case said SIP response is a 100 Trying response.

5. A method of generating a session initiation protocol response or SIP response (260) and sending said SIP response (260) from a SIP server (132) to a SIP client (121) in response to a SIP request (160) received from said SIP client (121) as part of an end-to-end multimedia session initiation, said SIP request (160) and said SIP response (260) jointly forming a single SIP dialog (160, 260) of said end-to-end multimedia session initiation, and copying a Call-ID header from said SIP request (160) into a Call-ID header of said SIP response (260), said method comprising:
- generating and inserting in said SIP response (260) a SIP header (261) containing at least one attribute value uniquely identifying said multimedia session initiation across multiple SIP dialogs that form part of said multimedia session initiation,
wherein said method further comprises at a SIP server (132) as part of an intermediate SIP aware identity (130) at the border between trusted zones (101, 102) deleting a P-Trace ID header present in a received SIP response (270) belonging to said multimedia session initiation and inserting a new P-Trace ID header in the newly generated SIP response (260), said new P-Trace ID header comprising the Call ID value of said SIP dialog (160, 260).

## Patentansprüche

1. Sitzungsinitiierungsprotokoll-Client oder SIP-Client (131), wobei der SIP-Client (131) dafür ausgelegt ist,
- eine SIP-Anforderung (170) als Teil einer Ende-zu-Ende-Multimedia-Sitzungsinitiierung anzufordern;
- einen Call-ID-Header und P-Trace-ID-Header für die SIP-Anforderung (170) zu erzeugen und zu senden; und
- die SIP-Anforderung (170) zu einem SIP-Server (142) zu senden, wobei die SIP-Anforderung (170) und eine von dem SIP-Server (142) zu dem SIP-Client (131) gesendete SIP-Antwort (270) gemeinsam einen einzelnen SIP-Dialog (170, 270) der Ende-zu-Ende-Multimedia-Sitzungsinitiierung bilden, wobei der SIP-Client (131) umfasst:
- einen SIP-Header-Generator, eingerichtet zum Erzeugen eines SIP-Headers (171), der mindestens einen Attributwert enthält, der die Multimedia-Sitzungsinitiierung über mehrere SIP-Dialoge, die Teil der Multimedia-Sitzungsinitiierung sind, eindeutig identifiziert, und zum Einsetzen in die SIP-Anforderung (170), wobei der SIP-Client (131) als Teil einer zwischengeschalteten SIP-sensiblen Entität (130) an der Grenze zwischen vertrauenswürdigen Zonen (101, 102) ferner dafür ausgelegt ist, den in einer empfangenen SIP-Anforderung (160), die zu der Multimedia-Sitzungsinitiierung gehört, vorliegenden P-Trace-ID-Header zu löschen und einen neuen P-Trace-ID-Header in die neu erzeugte SIP-Anforderung (170) einzusetzen, wobei der neue P-Trace-ID-Header den Call-ID-Wert des SIP-Dialogs (170, 270) umfasst.

2. Verfahren zum Erzeugen einer Sitzungsinitiierungsprotokoll-Anforderung oder SIP-Anforderung (170) als Teil einer Ende-zu-Ende-Multimedia-Sitzungsinitiierung; zum Erzeugen und Senden eines Call-ID-Headers und P-Trace-ID-Headers für die SIP-Anforderung (170); und zum Senden der SIP-Anforderung (170) von einem SIP-Client (131) zu einem SIP-Server (142), wobei die SIP-Anforderung (170) und eine von dem SIP-Server (142) zu dem SIP-Client (131) gesendete SIP-Antwort (270) gemeinsam einen einzelnen SIP-Dialog (170, 270) der Ende-zu-Ende-Multimedia-Sitzungsinitiierung bilden, wobei das Verfahren umfasst:
- Erzeugen eines SIP-Headers (171), der mindestens einen Attributwert enthält, der die Multimedia-Sitzungsinitiierung über mehrere SIP-Dialoge, die Teil der Multimedia-Sitzungsinitiierung sind, eindeutig identifiziert, und Einsetzen in die SIP-Anforderung (170),
wobei das Verfahren an einem SIP-Client (131) als Teil einer zwischengeschalteten SIP-sensiblen Entität (130) an der Grenze zwischen vertrauenswürdigen Zonen (101, 102) das Löschen des in einer empfangenen SIP-Anforderung (160), die zu der Multimedia-Sitzungsinitiierung gehört, vorliegenden P-Trace-ID-Headers und das Einsetzen eines neuen P-Trace-ID-Headers in die neu erzeugte SIP-Anforderung (170) umfasst, wobei der neue P-Trace-ID-Header den Call-ID-Wert des SIP-Dialogs (170, 270) umfasst.

3. Sitzungsinitiierungsprotokoll-Server oder SIP-Server (132), wobei der SIP-Server (132) dafür ausgelegt ist,
- eine SIP-Anforderung (160) von einem SIP-Client (121) als Teil einer Ende-zu-Ende-Multimedia-Sitzungsinitiierung zu empfangen;
- eine SIP-Antwort (260) zu dem SIP-Client (121) zu erzeugen und zu senden, wobei die SIP-Anforderung (160) und die SIP-Antwort (260) gemeinsam einen einzelnen SIP-Dialog (160, 260) der Ende-zu-Ende-Multimedia-Sitzungsinitiierung bilden, und
- einen Call-ID-Header aus der SIP-Anforderung (160) in einen Call-ID-Header der SIP-Antwort (260) zu kopieren, wobei der SIP-Server (132) umfasst:
- einen SIP-Header-Generator, eingerichtet zum Erzeugen eines SIP-Headers (261), der mindestens einen Attributwert enthält, der die Multimedia-Sitzungsinitiierung über mehrere SIP-Dialoge, die Teil der Multimedia-Sitzungsinitiierung sind, eindeutig identifiziert, und zum Einsetzen in die SIP-Antwort (260), wobei der SIP-Server (132) als Teil einer zwischengeschalteten SIP-sensiblen Entität (130) an der Grenze zwischen vertrauenswürdigen Zonen (101, 102) ferner dafür ausgelegt ist, einen in einer empfangenen SIP-Antwort (270), die zu der Multimedia-Sitzungsinitiierung gehört, vorliegenden P-Trace-ID-Header zu löschen und einen neuen P-Trace-ID-Header in die neu erzeugte SIP-Antwort (260) einzusetzen, wobei der neue P-Trace-ID-Header den Call-ID-Wert des SIP-Dialogs (160, 260) umfasst.

4. SIP-Server (122, 132, 142) nach Anspruch 3, wobei der SIP-Header-Generator dafür ausgelegt ist, den SIP-Header nicht einzusetzen, falls die SIP-Antwort eine 100-Trying-Antwort ist.

5. Verfahren zum Erzeugen einer Sitzungsinitiierungsprotokoll-Antwort oder SIP-Antwort (260) und Senden der SIP-Antwort (260) von einem SIP-Server (132) zu einem SIP-Client (121) in Reaktion auf eine von dem SIP-Client (121) als Teil einer Ende-zu-Ende-Multimedia-Sitzungsinitiierung empfangenen SIP-Anforderung (160), wobei die SIP-Anforderung (160) und die SIP-Antwort (260) gemeinsam einen einzelnen SIP-Dialog (160, 260) der Ende-zu-Ende-Multimedia-Sitzungsinitiierung bilden, und Kopieren eines Call-ID-Headers von der SIP-Anforderung (160) in einen Call-ID-Header der SIP-Antwort (260),
wobei das Verfahren umfasst:
- Erzeugen eines SIP-Headers (261), der mindestens einen Attributwert enthält, der die Multimedia-Sitzungsinitiierung über mehrere SIP-Dialoge, die einen Teil der Multimedia-Sitzungsinitiierung bilden, eindeutig identifiziert, und Einsetzen in die SIP-Antwort (260),
wobei das Verfahren ferner an einem SIP-Server (132) als Teil einer zwischengeschalteten SIP-sensiblen Identität (130) an der Grenze zwischen vertrauenswürdigen Zonen (101, 102) das Löschen eines in einer empfangenen SIP-Antwort (270), die zu der Multimedia-Sitzungsinitiierung gehört, vorliegenden P-Trace-ID-Headers und das Einsetzen eines neuen P-Trace-ID-Headers in die neu erzeugte SIP-Antwort (260) umfasst, wobei der neue P-Trace-ID-Header den Call-ID-Wert des SIP-Dialogs (160, 260) umfasst.

## Revendications

1. Client sur protocole d'ouverture de session ou client SIP (131), ledit client SIP (131) étant configuré pour :
générer une demande SIP (170) dans le cadre d'une ouverture de session multimédia de bout en bout ;
générer et envoyer un en-tête ID d'appel et un en-tête ID de trace P pour ladite demande SIP (170) ; et
envoyer ladite demande SIP (170) à un serveur SIP (142), ladite demande SIP (170) et une réponse SIP (270), envoyée depuis ledit serveur SIP (142) audit client SIP (131), formant conjointement un unique dialogue SIP (170, 270) de ladite ouverture de session multimédia de bout en bout,
ledit client SIP (131) comprenant :
un générateur d'en-tête SIP, conçu pour générer et insérer dans ladite demande SIP (170) un en-tête SIP (171) contenant au moins une valeur d'attribut identifiant exclusivement ladite ouverture de session multimédia dans de multiples dialogues SIP qui font partie de ladite ouverture de session multimédia,
ledit client SIP (131), dans le cadre d'une entité intermédiaire sensible à SIP (130) à la frontière entre des zones de confiance (101, 102), étant en outre configuré pour supprimer l'en-tête ID de trace P présent dans une demande SIP (160) reçue appartenant à ladite ouverture de session multimédia et insérer un nouvel en-tête ID de trace P dans la nouvelle demande SIP (170) générée, ledit nouvel en-tête ID de trace P comprenant la valeur ID d'appel dudit dialogue SIP (170, 270).

2. Procédé de génération d'une demande sur protocole d'ouverture de session ou demande SIP (170) dans le cadre d'une ouverture de session multimédia de bout en bout, de génération et d'envoi d'un en-tête ID d'appel et d'un en-tête ID de trace P pour ladite demande SIP (170) et d'envoi de ladite demande SIP (170) d'un client SIP (131) à un serveur SIP (142), ladite demande SIP (170) et une réponse SIP (270), envoyée depuis ledit serveur SIP (142) audit client SIP (131), formant conjointement un unique dialogue SIP (170, 270) de ladite ouverture de session multimédia de bout en bout,
ledit procédé consistant à :
générer et insérer dans ladite demande SIP (170) un en-tête SIP (171) contenant au moins une valeur d'attribut identifiant exclusivement ladite ouverture de session multimédia dans de multiples dialogues SIP qui font partie de ladite ouverture de session multimédia,
ledit procédé consistant à, au niveau d'un client SIP (131), dans le cadre d'une entité intermédiaire sensible à SIP (130) à la frontière entre des zones de confiance (101, 102), supprimer l'en-tête ID de trace P présent dans une demande SIP (160) reçue appartenant à ladite ouverture de session multimédia et insérer un nouvel en-tête ID de trace P dans la nouvelle demande SIP (170) générée, ledit nouvel en-tête ID de trace P comprenant la valeur ID d'appel dudit dialogue SIP (170, 270) .

3. Serveur sur protocole d'ouverture de session ou serveur SIP (132), ledit serveur SIP (132) étant configuré pour :
recevoir une demande SIP (160) en provenance d'un client SIP (121) dans le cadre d'une ouverture de session multimédia de bout en bout ;
générer et envoyer une réponse SIP (260) audit client SIP (121), ladite demande SIP (160) et ladite réponse SIP (260) formant conjointement un unique dialogue SIP (160, 260) de ladite ouverture de session multimédia de bout en bout ; et
copier un en-tête ID d'appel de ladite demande SIP (160) dans un en-tête ID d'appel de ladite réponse SIP (260),
ledit serveur SIP (132) comprenant :
un générateur d'en-tête SIP, conçu pour générer et insérer dans ladite réponse SIP (260) un en-tête SIP (261) contenant au moins une valeur d'attribut identifiant exclusivement ladite ouverture de session multimédia dans de multiples dialogues SIP qui font partie de ladite ouverture de session multimédia, ledit serveur SIP (132), dans le cadre d'une entité intermédiaire sensible à SIP (130) à la frontière entre des zones de confiance (101, 102) étant en outre configuré pour supprimer un en-tête ID de trace P présent dans une réponse SIP (270) reçue appartenant à ladite ouverture de session multimédia et insérer un nouvel en-tête ID de trace P dans la nouvelle réponse SIP (260) générée, ledit nouvel en-tête ID de trace P comprenant la valeur ID d'appel dudit dialogue SIP (160, 260).

4. Serveur SIP (122, 132, 142) selon la revendication 3, dans lequel ledit générateur d'en-tête SIP est configuré pour ne pas insérer ledit en-tête SIP si ladite réponse SIP est une réponse 100 Trying (Essai).

5. Procédé de génération d'une réponse sur protocole d'ouverture de session ou réponse SIP (260) et d'envoi de ladite réponse SIP (260) d'un serveur SIP (132) à un client SIP (121) en réponse à une demande SIP (160) reçue dudit client SIP (121) dans le cadre d'une ouverture de session multimédia de bout en bout, ladite demande SIP (160) et ladite réponse SIP (260) formant conjointement un unique dialogue SIP (160, 260) de ladite ouverture de session multimédia de bout en bout, et de copie d'un en-tête ID d'appel de ladite demande SIP (160) dans un en-tête ID d'appel de ladite réponse SIP (260),
ledit procédé consistant à :
générer et insérer dans ladite réponse SIP (260) un en-tête SIP (261) contenant au moins une valeur d'attribut identifiant exclusivement ladite ouverture de session multimédia dans de multiples dialogues SIP qui font partie de ladite ouverture de session multimédia,
ledit procédé consistant en outre à, au niveau d'un serveur SIP (132), dans le cadre d'une identité intermédiaire sensible à SIP (130) à la frontière entre des zones de confiance (101, 102), supprimer un en-tête ID de trace P présent dans une réponse SIP (270) reçue appartenant à ladite ouverture de session multimédia et insérer un nouvel en-tête ID de trace P dans la nouvelle réponse SIP (260) générée, ledit nouvel en-tête ID de trace P comprenant la valeur ID d'appel dudit dialogue SIP (160, 260).
